# EUROPÄISCHE PATENTSCHRIFT

(11) **EP 1 280 111 B1**
(45) Veröffentlichungstag und Bekanntmachung des Hinweises auf die Patenterteilung: **16.01.2008**
(21) Anmeldenummer: 01126124.5
(22) Anmeldetag: 03.11.2001
(51) Int. Cl.: G07F 7/06, G06Q 30/00

(54) **Vorrichtung und Verfahren zur Rücknahme von Gegenständen, insbesondere zur Rücknahme von Gebinden der Getränkeindustrie**
Apparatus and method for returning items, in particular for returning items of the beverage industry
Appareil et procédé pour retourner des articles, en particulier pour retourner des articles de l'industrie de boissons

(30) Priorität: 11.07.2001 DE 10132771
(43) Veröffentlichungstag der Anmeldung: 29.01.2003
(73) Patentinhaber: Zentek Gesellschaft für Kreislaufwirtschaftssysteme in Deutchland mbH & Co. KG, 50996 Köln (DE)
(72) Erfinder: Kasel, Torsten, Dr., 40764 Langenfeld (DE)
(74) Vertreter: Liebl, Thomas

(56) Entgegenhaltungen:
- EP-A- 0 881 607
- EP-A- 0 924 659
- EP-A- 1 052 583
- WO-A-94/19776
- GB-A- 2 097 162
- US-A- 4 953 682

## Beschreibung

Die Erfindung betrifft eine Vorrichtung zur Rücknahme von Gegenständen, insbesondere zur Rücknahme von Gebinden der Getränkeindustrie, nach dem Oberbegriff des Anspruchs 1. Ferner betrifft diese Erfindung ein Verfahren zur Rücknahme von Gegenständen, insbesondere zur Rücknahme von Gebinden der Getränkeindustrie, nach dem Oberbegriff des Anspruchs 20.

Derartige Vorrichtungen und Verfahren zur Rücknahme von Gegenständen sind insbesondere in Verbindung mit den Gebinden der Getränkeindustrie bekannt. So wird gemäß dem für Deutschland praktizierten Pfandsystem für Pfandflaschen von einem Abfüller, z. B. einer Brauerei, vom beziehenden Händler ein Pfand für jede Flasche sowie gegebenenfalls für den Träger verrechnet. Diesen Pfandbetrag verrechnet der Händler an den Verbraucher weiter, der bei der Rückgabe der geleerten Flaschen mitsamt Träger vom Händler wiederum sein eingesetztes Pfandgeld zurückerhält. Vom Händler werden anschließend die leeren Flaschen mitsamt Träger wieder an den Abfüller zurückgegeben, der dem Händler entsprechend pro Flasche bzw. Träger den Pfandeinsatz zurückzahlt. Dieses System hat sich in Verbindung mit Mehrwegflaschen und Mehrweggefäßen bewährt, wobei die Möglichkeit der Manipulation zur Erschleichung von Pfandgeldern, z. B. durch Rückgabe von Plagiaten oder dergleichen, hier relativ gering ist.

Anders stellt sich dies allerdings bei Einweg-Gebinden dar, die nach der novellierten deutschen Verpackungsverordnung nunmehr ebenfalls einer Pfandpflicht unterliegen sollen. Diese Einweg-Gebinde, z. B. Getränkekartons, Getränkeverpackungen, Flaschen, Dosen oder dergleichen werden nach der Rückgabe an den Handel bzw. an entsprechende in der Regel beim Handel aufgestellte Rücknahmeautomaten durch den Verbraucher und der entsprechenden Rückerstattung des Pfandgeldes an den Verbraucher anders als beim Mehrwegsystem nicht mehr zu den Abfüllern zurückgeführt, sondern werden in entsprechenden Recyclingbetrieben recycelt. Als Konsequenz hieraus trennen sich somit bei einem derartigen Einweg-Pfandsystem beim Handel der Pfandweg und der Gebindeweg nach einer Rücknahme. Dadurch werden Missbrauchmöglichkeiten eröffnet, was nachfolgend noch näher erläutert wird.

Ein derartiges System zur Rücknahme von Einweg-Gebinden ist z. B. bereits aus Schweden allgemein bekannt. Bei diesem System hat der Händler beim Erwerb der Gebinde vom Abfüller an diesen einen entsprechenden Pfandbetrag zu zahlen, den der Abfüller wiederum an eine zentrale Verwaltungsgesellschaft abzugeben hat. Vom Händler wird das Pfand auf die Einweg-Gebinde an die Verbraucher weitergegeben und nach Rückgabe der leeren Gebinde an die Verbraucher wieder zurückerstattet. Um den Pfandkreislauf zu schließen, erhält der Händler dann von der zentralen Verwaltungsgesellschaft dasjenige Pfandgeld rückerstattet, das dieser anfänglich vom Abfüller erhalten hat. Die Rückgabe der gebrauchten Einweg-Gebinde erfolgt beim Handel über Rücknahmeautomaten, die eine Online-Verbindung zu einer Auswerteeinrichtung bei der zentralen Verwaltungsgesellschaft haben, damit diese den Rückfluss der Einweg-Gebinde überwachen und die Pfandausgleichszahlungen gegenüber dem Handel vornehmen können.

Die Gefahr einer Manipulation des System zur Erschleichung von Pfandgeldern ist hier jedoch relativ groß, da z. B. im Einflussbereich des Händlers ein und dasselbe Einweg-Gebinde gegebenenfalls mehrmals zurückgegeben wird, so dass für ein und dasselbe Einweg-Gebinde unter Umständen auch mehrmals in unberechtigter Weise ein Pfandrückgeld von der zentralen Verwaltungsstelle erstattet wird. Dadurch besteht somit die Gefahr einer Pfanderschleichung. Desweiteren besteht hier die Gefahr, dass Plagiate zurückgegeben werden, für die dann z. B. ein Pfand ausgezahlt wird, obwohl für diese gar kein Pfand zu erstatten ist. Diese Plagiate können z. B. Gebinde aus dem Ausland sein. Desweiteren besteht hier die Gefahr, dass für in den Handel gebrachte Einweg-Gebinde kein Pfandgeld an die zentrale Verwaltungsgesellschaft abgeführt wird, so dass eine Pfandzahlung z. B. im Bereich des Abfüllers verbleibt. Die Manipulationsgefahr ist bei diesem System der Rückgabe von Einweg-Gebinden somit sehr groß, was wie bereits erwähnt durch die Trennung von Pfand- und Gebindeweg bedingt ist, wobei die Schädigungen hierdurch insbesondere aufgrund des für Deutschland erwarteten hohen Pfands von zwischen 0,25 und 0,50 Euro erheblich sein kann und gegebenenfalls zum Nicht-Funktionieren oder gar Zusammenbrechen dieses Rückgabesystems führen kann.

Um die Gefahr von Manipulationen durch mehrmaliges Rückgeben zu verringern, ist es z. B. in Schweden bereits allgemein bekannt, die zurückgegebenen Einweg-Gebinde direkt in den Rücknahmeautomaten vollständig zu zerstören, um eine erneute Pfandauszahlung für dasselbe Gebinde zu verhindern. Dazu sind sogenannte Shreddereinheiten in die Rücknahmeautomaten integriert, die regelmäßig auch eine Farberkennungseinheit und eine Trennmechanik für die erforderliche Sortierung von z. B. Glasscherben umfassen, da eine derartige Sortierung unmittelbar nach dem Shreddern am besten durchführbar ist. Diese Rücknahmeautomaten sind somit insgesamt sehr aufwendig in der Herstellung und auch in der Bedienung. Zudem sind sie sehr wartungs- und reparaturintensiv. Eine derartige Zerkleinerung bzw. Zerstörung führt weiter zu Problemen hinsichtlich der Arbeitssicherheit, z. B. durch die entstehenden Scherben. Weiter ist hier auch nach wie vor eine Betrugsgefahr gegeben, z. B. durch Grauimporte aus dem Ausland, bei denen im Inland ursprünglich nicht mit Pfand belegte Einweg-Gebinde über den Rücknahmeautomaten zurückgegeben werden und ein Pfandrückgeld in unerlaubter Weise kassiert wird. Ebenso können nach wie vor auch Plagiate in den Rücknahmeautomaten eingebracht werden, für die dann ein Pfand ausgezahlt wird. Weiter besteht hier nach wie vor die Möglichkeit, mit Pfand zu belegende Einweg-Gebinde nicht an die zentrale Verwaltungsstelle zu melden. Die Manipulationsgefahr ist hier somit noch sehr groß.

Eine bekannte, gattungsgemäße Vorrichtung zur Rücknahme von Gegenständen in Form eines Becherrücknahmeautomaten ist aus der DE 41 26 260 C1 bekannt, der eine Erkennungseinrichtung aufweist, mittels der eine auf den Gegenständen aufgebrachte Kennung erfassbar ist.

Die Patentschrift US-A-4 953 682 offenbart eine automatische Vorrichtung zur Rücknahme von pfandbeaufschlagten Aluminiumdosen. Die Systemkompatiblen Dosen werden mit einer Wiedererkennungs- Markierung auf dem Boden oder am Oberteil der Dose versehen. Identifizierte Dosen werden im weiteren Verlauf des Verfahrens von der Vorrichtung komprimiert.

Konkret dient dieser Becherrücknahmeautomat dazu, benutzte Becher, insbesondere Einmal-Trinkbecher einer geordneten Abfallentsorgung und ggf. Abfallwiederverwertung zuzuführen. Dazu werden frische Becher gegen ein Pfandgeld ausgegeben, das vom Becherrücknahmeautomat bei Eingabe des benutzten Bechers wieder erstattet wird, wobei mit der Erkennungseinrichtung Missbräuchen vorgebeugt werden soll. Dazu ist der Becher mit einer an der Becherwand vorgesehenen Kennung ausgestattet, die mit einem Fühler abgefragt wird. Wenn der Fühler einen Becher mit einer zugelassenen Kennung erfasst, wird der Becher vom Becherrücknahmeautomaten für die Sammlung aufgenommen. Zudem erfolgt die Pfandgeldrücknahme. Als Kennung ist hierbei eine Art von Strichcode umlaufend auf die Becheraußenwand aufgedruckt. Dieser Strichcode wird über eine Reflexlichtschranke erfasst und mit einer Signalverarbeitungseinrichtung ausgewertet.

Auch hier besteht die Gefahr, dass die Becher mehrmals zurückgegeben werden, so dass Pfandgeld gegebenenfalls auch mehrmals für ein und denselben Becher ausgezahlt wird. Außerdem kann ein derartiger Strichcode relativ leicht kopiert werden und z. B. auf beliebige geeignete Gegenstände aufgebracht werden, die vom Becherrücknahmeautomaten aufgrund der Identifizierung des Strichcodes akzeptiert werden. Hierdurch käme es dann für diese Plagiate zu unberechtigten Pfandauszahlungen. Zudem können auch hier wiederum Manipulationen durch Nichtmeldung an die Verwaltungsstelle auftreten.

In Verbindung mit Mehrwegsystemen mit Mehrweggefäßen, z. B. mit Mehrwegbechem ist aus der DE 195 08 388 A1 weiter ein Rücknahmeautomat bekannt, bei der für eine Gefäßerkennung ein Mehrweggefäß mit Hilfe einer Transporteinheit in eine weitgehend lichtdichte Erkennungskammer in den Automateninnenbereich befördert wird. Dort ist eine Lichtquelle vorgesehen, mit der ein Mehrweggefäß in der Erkennungskammer beleuchtet wird. Als Reaktion auf die Beleuchtung wird von einem systemkonformen Mehrweggefäß durch ein bestimmtes Material oder eine bestimmte Oberflächenbeschaffenheit eine bestimmte, zugeordnete optische Strahlung abgegeben und/oder reflektiert, die von einem optischen Sensor erfasst und einer nachgeschalteten Signalverarbeitung ausgewertet wird. Das Mehrweggefäß weist hier einen fluoreszierenden Farbanteil auf, so dass nach der Bestrahlung mit einer UV-Lichtquelle ein Fluoreszenzeffekt erzielt wird, der eine einfache Gefäßerkennung ermöglicht. Nachdem ein Mehrweggefäß als richtig erkannt wird, erfolgt eine Pfandgeldrückgabe.

Der Aufwand zur Plagiaterstellung ist hier zwar erheblich, doch besteht auch hier eine Manipulationsgefahr dahingehend, dass die vom Rücknahmeautomaten bereits einmal erfassten und mit einer Pfandrückgabe vergüteten Mehrweggefäße in unerlaubter Weise wiederholt in die Becherrücknahmeautomaten eingegeben werden, so dass für ein und dasselbe Mehrweggefäß unter Umständen mehrmals eine Pfandgeldrückgabe erfolgt. Dies ist leicht möglich, da derartige Rücknahmeautomaten, wie dies bereits oben geschildert worden ist, z. B. bei einem Getränkehändler aufgestellt werden, der die zurückgenommenen Mehrweggefäße regelmäßig aus dem Rücknahmeautomaten nimmt und zur Abholung bereitstellt.

Desweiteren ist insbesondere für den europäischen Raum beabsichtigt, dass auch Elektrogeräte bzw. elektronische Bauteile am Ende ihrer Lebensdauer als Elektroschrott zurückgenommen bzw. gezielt recycelt und/oder entsorgt werden. Das Recycling und die Entsorgung soll dabei von autorisierten Fachbetrieben durchgeführt werden. Die bei den Fachbetrieben anfallenden Recycling- und/oder Entsorgungskosten sollen jedoch den Herstellern in Rechnung gestellt werden. Auch bei diesem Rücknahmesystem ist die Missbrauchsgefahr relativ hoch, da z. B. einem Hersteller von elektronischen Geräten nie entstandene Entsorgungskosten direkt oder indirekt über Poollösungen verrechnet werden könnten. Dies ist insbesondere dann problematisch, wenn die elektronischen Geräte eine Lebensdauer von mehreren Jahren aufweisen, wie das beispielsweise bei Waschmaschinen der Fall ist, da hier dann die Entsorgungskosten erst sehr viel später in Rechnung gestellt werden. Ein manipulationssicheres automatisiertes Rücknahmesystem für diese sogenannte Elektroschrott-Entsorgung existiert derzeit noch nicht. Auch für andere Gegenstände, wie z. B. Kunststoffe, z. B. Fensterrahmen aus PVC, Kraftfahrzeuge und Kraftfahrzeugteile sowie Möbel, z. B. Matratzen, die recycelt bzw. entsorgt werden müssen, existiert noch kein manipulationssicheres, praktikables, automatisiertes Rücknahmesystem.

Aufgabe der Erfindung ist es daher, eine Vorrichtung und ein Verfahren zur Rücknahme von Gegenständen, insbesondere von Einweg-Gebinden der Getränkeindustrie zu schaffen, mit der die Gefahr einer Manipulation, insbesondere hinsichtlich einer Pfandrückerstattung, auf einfache Weise reduziert werden kann.

Diese Aufgabe wird bezüglich der Vorrichtung gelöst mit der Merkmalen des Anspruchs 1.

Gemäß Anspruch 1 ist der Erkennungseinrichtung eine Kennungs-Entwertungseinrichtung nachgeschaltet, mit der lediglich die auf den Gegenständen aufgebrachte Kennung nach deren Erfassung entwertet und/oder zerstört ist.

Mit einer derartigen Entwertungseinrichtung wird vorteilhaft nur die Kennung der Gegenstände, z. B. von Getränke-Gebinden, zerstört, ohne dass der rückgenommene Gegenstand als solches zerstört wird. Vorteilhaft ergeben sich hierdurch insbesondere z. B. in Verbindung mit Glasflaschen keine Probleme hinsichtlich der Arbeitssicherheit durch das Auftreten von Glasscherben oder dergleichen. Desweiteren ist hier keine Sortierung der zerkleinerten Teile, z. B. der einzelnen Glasscherben, in der Vorrichtung mehr erforderlich, sondern kann eine Separierung anhand der einfach handzuhabenden unzerstörten Gegenstände vorgenommen werden, so dass bei den Vorrichtungen sowohl eine Farberkennungseinheit als auch eine Trennmechanik überflüssig wird. Da somit bei z. B. Flaschen als Einweg-Gebinden keine kleinen Scherben anfallen, können die unbeschädigten Gebinde einfachst in einem herkömmlichen Behälter gesammelt werden. Eine sehr leichte Trennung ganzer Gebinde kann dann einfach und preisgünstig - auch farblich - in vorhandenen, spezialisierten Verwertungsanlagen von Verwertungsbetrieben zentral erfolgen. Derartige Vorrichtungen können somit besonders einfach und preiswert hergestellt werden, da im Gegensatz zum bekannten Stand der Technik keine teueren und schwierig zu bedienenden Shredder- und/oder Kompaktiereinrichtungen in Verbindung mit einer Farberkennungseinheit und einer Trennmechanik an einer derartigen Vorrichtung integriert werden müssen.

Desweiteren ist die Manipulationsgefahr z. B. hinsichtlich der Pfandgelderschleichung durch mehrmaliges Rückgeben oder durch falsche Abrechnung entstandner Entsorgungskosten nicht mehr gegeben, da die Kennung unmittelbar nach ihrer einzigen Erfassung sofort entwertet und/oder zerstört wird. Dadurch können die einmal erfassten Gegenstände nicht mehr wiederholt registriert werden. In Verbindung mit von einer zentralen Verwaltungsstelle ausgegebenen Kennungen kann die Manipulationsgefahr insgesamt wesentlich reduziert werden, da nur solche Gegenstände zurückgenommen werden, die mit einer derartigen Kennung, z. B. einer Pfandmarke oder Wertmarke, versehen sind. Die Gefahr durch Grauimporte sowie durch Plagiate ist hier somit erheblich reduziert.

Die Vorteile wurden hier beispielhaft in Verbindung mit Getränke-Gebinden erläutert. Jedoch ergeben sich auch wesentliche Vorteile in Verbindung mit Rücknahmesystemen von z. B. Elektronikschrott, bei dem eine Verrechnung der Recycling- und/oder Entsorgungskosten erst am Ende der Lebensdauer der elektronischen Geräte erfolgt. Denn auch hier kann durch die Entwertung z. B. die mehrfache Kostenanlastung an die Hersteller direkt oder indirekt über Poollösungen vorteilhaft verhindert werden. Ebenso ergeben sich die Vorteile auch bei der Rücknahme und dem Recycling bzw. der Entsorgung anderer Gegenstände, wie z. B. von Kraftfahrzeugen oder Teilen davon, um nur einen weiteren Gegenstand beispielhaft zu nennen.

Ein weiterer Vorteil ist, dass auch bei bestehenden Konkurrenzsystemen lediglich eine einmalige Erfassung erfolgen kann, da die Kennung unmittelbar nach Ihrer Registrierung zerstört bzw. entwertet wird, wobei zudem eine eindeutige Zuordnung zu einem beauftragten Rücknahmesystem möglich ist. Ggf. sind die Systeme miteinander derart kompatibel, dass auch eine gegenseitige Verrechnung zwischen den konkurrierenden Systemen möglich ist. Insbesondere bei Elektronikschrott oder dergleichen wäre auch eine stückgenaue Verrechnungsmöglichkeit gegeben, da die einzelnen Gegenstände nicht als solche insgesamt zerstört bzw. zerkleinert werden müssen, um die Manipulationsgefahr in der erwünschten Weise zu reduzieren.

Weiter sind derartige Vorrichtungen wenig wartungs- und reparaturintensiv sowie auch einfach zu bedienen.

Die Erfindung wurde vorliegend mit einer einzigen Kennung erläutert. Es ist jedoch ohne weiteres möglich, mehrere Kennungen vorzusehen, die mittels der Kennungs-Entwertungseinrichtung entwertet und/oder zerstört werden können.

Weitere Vorteile ergeben sich in Verbindung mit den Unteransprüchen:

Gemäß Anspruch 2 ist der Erkennungseinrichtung eine Auswerteeinrichtung nachgeschaltet, in der die von der Erkennungseinrichtung erfassten Daten auswertbar sind. Mit einer derartigen Auswerteeinrichtung, die z. B. eine zentrale Auswerteeinrichtung ist, können die erfassten Daten einfach ausgewertet werden und eine der jeweiligen Vorrichtung genau zugeordnete Rückgabemenge und bei der Ausbildung der Kennung als Pfandmarke genau zugeordneter Pfandwert zugeordnet werden. Denn gemäß Anspruch 3 ist die Kennung in einer besonders bevorzugten Ausbildungsform durch eine auf den Gegenständen aufgebrachte Pfandmarke gebildet, die einen bestimmten, mittels der Erkennungseinrichtung erfassbaren Pfandwert aufweist. Damit ist eine besonders einfache und sichere Zuordnung des Pfandwertes möglich, wobei an eine z. B. zentrale Verwaltungsstelle stets nur die tatsächlich zurückgegebene Menge gemeldet wird, so dass z. B. dem Handel der tatsächliche Pfandwert zurückerstattet wird. Alternativ kann die Kennung auch als Wertmarke oder Kennmarke ausgebildet sein.

Gemäß Anspruch 4 sind die Kennungen zudem so ausgebildet, dass mittels der Erkennungseinrichtung bestimmte Hinweise auf den Gegenstand, insbesondere auf die Art und/oder die Beschaffenheit und/oder die Menge und/oder das Gewicht und/oder die Herkunft des Gegenstandes erfassbar und der Auswerteeinrichtung zur Auswertung der Daten zuführbar sind. Mit derartigen, über die Kennungen erfassten Daten ist ein besonders vorteilhaftes Logistiksystem sowohl für einen Pfandkreislauf als auch für einen Gegenstandskreislauf, bevorzugt für einen Gebindekreislauf der Getränkeindustrie, möglich. So kann z. B. gemäß den Merkmalen des Anspruchs 5 beim Erreichen oder beim Überschreiten bestimmter vorgegebener Mengen- und/oder Gewichtswerte ein Abholsignal an eine Abholeinrichtung geliefert werden, die die aufgelaufenen und mit einer entwerten und/oder zerstörten Kennung versehenen, rückgenommenen Gegenstände vom Lagerort abholt und gegebenenfalls einer Zerkleinerungs- und/oder Kompaktiereinrichtung einer Entsorgungseinrichtung zuführt, in der die Gegenstände zerkleinerbar und/oder verdichtbar sind. Eine derartige Entsorgungseinrichtung kann beispielsweise bei einem Entsorgungsbetrieb aufgebaut sein, der auch die Abholeinrichtung betreibt. Dadurch wird erreicht, dass insbesondere in Verbindung mit Einweg-Gebinden die Weiterverarbeitung beim Spezialisten durchgeführt werden kann, ohne die Zwischenschaltung von aufwendigen und damit kostenintensiven Zwischenstationen, z. B. beim Händler von Getränke-Gebinden. In Verbindung mit z. B. Elektronikschrott kann dort eine gezielte fachgerechte Zerlegung unter ggf. Recycling wiederverwendbarer Teile erfolgen.

Eine weitere bevorzugte Ausführungsform nach Anspruch 6 sieht vor, dass die Kennung fälschungssicher in der Art einer Banknote ausgebildet ist. Eine derartig ausgebildete Kennung ist nicht mit einfachen Mitteln kopierbar. Insbesondere in Verbindung mit von einer zentralen Verwaltungsstelle ausgegebenen Kennungen wird somit die Manipulationsgefahr nahezu auf Null reduziert, da insgesamt nur derjenige Betrag als Pfandgeld ausgegeben wird, der tatsächlich insgesamt eingesetzt wurde. Damit wird eine Sicherheit wie beim deutschen Mehrwegsystem mit Pfandflaschen erreicht. Dies rechnet sich insbesondere bei einem Rückgabesystem von Einweg-Gebinden, das mit einem hohen Pfandwert belegt ist.

Gemäß einer besonders einfachen Ausführungsform ist nach Anspruch 7 vorgesehen, dass die Kennung als auf den Gegenstand aufklebbare Marke ausgebildet ist. Diese Marke kann beispielsweise in Verbindung mit der Getränkeindustrie beim Abfüller direkt auf das Einweg-Gebinde, z. B. den Getränkekarton, die Getränke-Dose oder dergleichen, aufgeklebt werden. Dies kann beispielsweise unmittelbar nach der Abfüllung und vor der Verpackung der Einweg-Gebinde erfolgen, ohne dass besonders aufwendige Eingriffe in den normalen Abfüllbetrieb erforderlich sind.

Grundsätzlich gibt es verschiedene Möglichkeiten, die Entwertung und/oder Zerstörung der Kennung vorzunehmen. Gemäß Anspruch 8 ist vorgesehen, dass die Kennungs-Entwertungseinrichtung so ausgebildet ist, dass damit eine thermische und/oder chemische und/oder elektronische und/oder mechanische Zerstörung der Kennung bewirkt wird. Dies kann beispielsweise durch Aufsprühen einer dauerhaften, schnell trocknenden Farbe oder durch ein zumindest teilweises mechanisches Entfernen der Kennung erfolgen.

Besonders bevorzugt sind die Gegenstände gemäß Anspruch 9 Einweggebinde der Getränkeindustrie, vorzugsweise Einwegverpackungen oder Einwegflaschen oder Einwegdosen oder dergleichen, wie dies zuvor bereits mehrmals beispielhaft erläutert worden ist. Grundsätzlich können die Gegenstände jedoch auch sämtliche sonstigen Verpackungen sein. Ebenso können die Gegenstände gemäß Anspruch 10 auch Elektrogeräte bzw. elektronische Geräte und Bauteile als Elektroschrott sein. Ebenso sind Kraftfahrzeuge sowie auch Teile von Kraftfahrzeugen als Gegenstände denkbar. Auch Möbel, wie z. B. Matratzen oder dergleichen, können entsprechend geeignete Gegenstände sein. Des Weiteren können auch Kunststoffe, wie z. B. PVC, z. B. speziell gekennzeichnete Fensterrahmen oder dergleichen, derartige Gegenstände sein. Die Aufzählung der Gegenstände ist hier nur beispielhaft gewählt, da grundsätzlich sämtliche Gegenstände verwendet werden können, auf denen eine Kennung aufbringbar ist.

Die Erkennungseinrichtung kann grundsätzlich separat zu der Kennungs-Entwertungseinrichtung ausgebildet sein. Jedoch ist gemäß Anspruch 11 für einen besonders kompakten Aufbau auch eine Ausgestaltung möglich, bei der die Erkennungseinrichtung integral mit der Kennungs-Entwertungseinrichtung ausgebildet ist.

Gemäß Anspruch 12 kann die Vorrichtung als mit der Hand bedienbares Handgerät mit darin integrierter Erkennungs- und Entwertungseinrichtung ausgebildet sein. Ein derartiges Handgerät ist besonders einfach herzustellen und zu bedienen und auch besonders einfach in bestehende Rücknahmesysteme beim Handel zu integrieren. Zudem kann mit einem derartigen Handgerät eine Erkennung und Entwertung der Kennung auf besonders schnelle und einfache Weise durchgeführt werden, z. B. an einer Rücknahmestation im Getränkehandel. Gleichzeitig können dann z. B. an einem angekoppelten Kassenautomaten und/oder einem Computer von der Erkennungseinrichtung erfasste Daten zur Errechnung des rückzuzahlenden Pfandbetrags oder Erstattung des Pfandwertes verwendet werden.

Gemäß einer alternativen Ausführungsform hierzu ist nach Anspruch 13 die Vorrichtung als Rücknahmeautomat ausgebildet, der eine Aufnahmeeinrichtung zur Aufnahme der rückzunehmenden Gegenstände aufweist. Dieser Aufnahmeeinrichtung ist die Erkennungseinrichtung zugeordnet zur Erfassung der auf den rückzunehmenden Gegenständen aufgebrachten Kennung. Der Erkennungseinrichtung ist dann wiederum die Kennungs-Entwertungseinrichtung nachgeschaltet, zur Entwertung und/oder Zerstörung der auf den Gegenständen aufgebrachten und mittels der Erkennungseinrichtung erfassten Kennung. Ein derartiger Rücknahmeautomat kann bei einem Händler, z. B. in einem Supermarkt, aufgestellt werden, so dass die Verbraucher ohne zur Verfügungstellung einer Bedienperson direkt ihre z. B. Einweg-Gebinde auf einfache und funktionssichere Weise zurückgeben können.

Nach Anspruch 14 weist der Rücknahmeautomat vorzugsweise eine entleerbare Zwischenlagereinrichtung auf, in der die Gegenstände mitsamt entwerter und/oder zerstörter Kennung zwischenlagerbar sind. Weiter kann der Rücknahmeautomat nach Anspruch 15 eine Pfandrückgabeeinrichtung auf zur Ausgabe eines dem oder den rückgegeben Gegenständen entsprechenden und mittels der Erkennungseinrichtung erfassten Pfandwertes. Dieser Pfandwert wird vorzugsweise in Form von Geldscheinen und/oder Geldstücken und/oder Wertmünzen und/oder Wertscheinen und/oder in Form eines auf einer Chipkarte speicherbaren Geldwertes rückerstattet. Dies ist auch beim zuvor beschriebenen Handgerät möglich.

Weiter kann der Rücknahmeautomat nach Anspruch 16 so ausgebildet sein, dass nicht mit einer mittels der Erkennungseinrichtung erkennbaren und erfassbaren Kennung markierte Gegenstände von der Erkennungseinrichtung nicht erfasst und gegebenenfalls nicht angenommen und/oder aussortiert werden. Dadurch wird auf einfache Weise sichergestellt, dass im Rücknahmeautomat nur solche Gegenstände aufgenommen und damit zwischengelagert werden, für die z. B. ein Pfand entrichtet wurde und die als Einweg-Gebinde einer Wiederverwertung zugeführt werden sollen.

Nach Anspruch 17 kann eine Auswerteeinrichtung entfernt zu der Erkennungseinrichtung und der Kennungs-Entwertungseinrichtung angeordnet sein sowie Bestandteil einer vorzugsweise zentralen Ausgabeeinrichtung als Verwaltungseinrichtung für Kennungen sein. Von dieser vorzugsweise zentralen Ausgabeeinrichtung sind z. B. gemäß Anspruch 18 Pfandmarken entsprechend einem bestimmten Pfandwert ausgebbar oder im Falle der Rückgabe von Elektronikschrott Wertmarken oder Kennmarken zur Kennzeichnung und/oder Markierung ausgebbar. Im letzteren Fall kann dann die z. B. stückgenaue Abrechnung vorteilhaft über die Verwaltungseinrichtung erfolgen. Eine derartige zentrale Auswerteeinrichtung hat den Vorteil, dass z. B. die Pfandrückgabe gemäß den Merkmalen des Anspruchs 19 auf besonders einfache und sichere Weise mit geringem Aufwand sowie überschaubar mit wenig Personal koordiniert werden kann, wobei die Manipulationsgefahr weitgehend ausgeschaltet ist. Die Rückgabe der Gegenstände erfolgt dagegen vorzugsweise dezentral an denjenigen Stellen, an denen die Vorrichtung aufgestellt ist, vorzugsweise beim Handel.

Die Aufgabe wird bezüglich des Verfahrens mit den Merkmalen des Anspruchs 20 gelöst.

Mit den Merkmalen der Ansprüche 21 bis 24 ist ein Verfahren zur Rücknahme von Gegenständen, insbesondere zur Rücknahme von Gebinden der Getränkeindustrie, beansprucht, mit dem bzw. mit denen sich die oben in Verbindung mit der Vorrichtung ausführlich geschilderten Vorteile ergeben.

Die Erfindung wird nachfolgend anhand einer Zeichnung näher erläutert.

Es zeigen:
- Fig. 1: eine schematische Darstellung eines Ablaufplans für ein Verfahren zur Rücknahme von Einweg-Gebinden der Getränkeindustrie, und
- Fig. 2: eine schematische Darstellung eines Ablaufplans eines alternativen Verfahrens zur Rücknahme von Einweg-Gebinden der Getränkeindustrie.

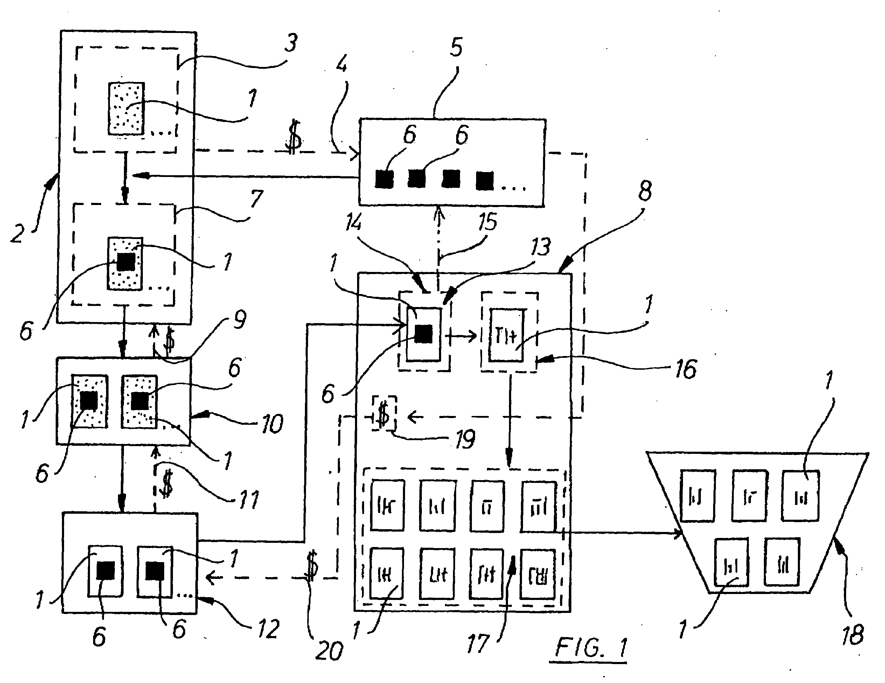

In der Darstellung der Fig. 1 ist schematisch ein Ablaufplan für ein Verfahren zur Rücknahme von Einweg-Gebinden 1 der Getränkeindustrie, hier beispielhaft anhand eines Getränkekartons, gezeigt. Dieser Getränkekarton 1 wird in einer Abfülleinrichtung 2, z. B. einem Getränkehersteller, in einer Abfüllstation 3 abgefüllt. Gegen die Zahlung eines Pfandgelds entsprechend dem gestrichelten Pfeil 4 an eine zentrale Verwaltungseinrichtung 5 wird der Abfülleinrichtung 2 eine dem Pfandgeld entsprechende Menge an Pfandmarken 6 ausgegeben, die dann in einer Markierungsstation 7 der Abfülleinrichtung 2 auf die fertig abgefüllten Getränkekartons 1 aufgebracht werden zur Herstellung markierter, gefüllter Getränkekartons 1.

Gegen Zahlung des entsprechenden Pfandgelds 9 erwirbt dann eine Handelseinrichtung 10, z. B. ein Supermarkt, die markierten und gefüllten Getränkekartons 1. Diese Handelseinrichtung 10 verkauft diese markierten und gefüllten Getränkekartons 1 ebenfalls unter Erhebung eines Pfandgelds an einen Verbraucher 12. Der Verbraucher 12 gibt dann die markierten, leeren Getränkekartons 1 in eine Aufnahmeeinrichtung 13 eines Rücknahmeautomaten 8, wobei dieser Aufnahmeeinrichtung 13 eine Erkennungseinrichtung 14 zugeordnet ist, zur Erfassung der auf den rückzunehmenden Getränkekartons 1 aufgebrachten Pfandmarke 6. Die von der Erkennungseinrichtung 14 erfassten Daten der Pfandmarke 6 werden über eine Leitung 15 zu einer Auswerteeinheit der Verwaltungseinrichtung 5 geliefert.

Der Erkennungseinrichtung 14 ist eine Entwertungseinrichtung 16 nachgeschaltet, in der die Pfandmarke 6 entwertet und/oder zerstört wird, wie dies in der Fig. 1 lediglich schematisch dargestellt ist. Von der Entwertungseinrichtung 16 ausgehend werden die Getränkekartons 1 mit den entwerteten und/oder zerstörten Pfandmarken 6 zu einer Lagereinrichtung 17 des Rücknahmeautomaten 8 transportiert. Von dieser Lagereinrichtung 17 ausgehend werden die mit der entwerteten und/oder zerstörten Pfandmarke versehenen Getränkekartons 1 dann gegebenenfalls unter Zwischenlagerung bei der Handelseinrichtung von einer Abholeinrichtung abgeholt und bei einer Entsorgungseinrichtung 18, z. B. einem Entsorgungsbetrieb, weiterverarbeitet.

Nachdem der Verbraucher 12 die markierten, leeren Getränkekartons 1 zurückgegeben hat, wird entsprechend der Menge der zurückgegebenen Getränkekartons über eine Pfandrückgabeeinrichtung 19 des Rücknahmeautomaten 8 ein entsprechendes Pfandgeld 20 an den Verbraucher 12 zurückgezahlt.

Wie dies in der Fig. 1 lediglich äußerst schematisch dargestellt ist, wird der Pfandgeldkreislauf dadurch geschlossen, dass das von der Verwaltungseinrichtung 5 verwaltete Pfandgeld 4 mittelbar oder unmittelbar in der Pfandrückgabeeinrichtung 19 zur Verfügung gestellt wird. Zum Beispiel kann damit entsprechend der von der Leitung 15 an die Verwaltungsstelle 5 gelieferten Daten ein Pfandgeldausgleich an die Handelseinrichtung 10 gezahlt werden, die dann die Pfandrückgabeeinrichtung 19 entsprechend bestückt.

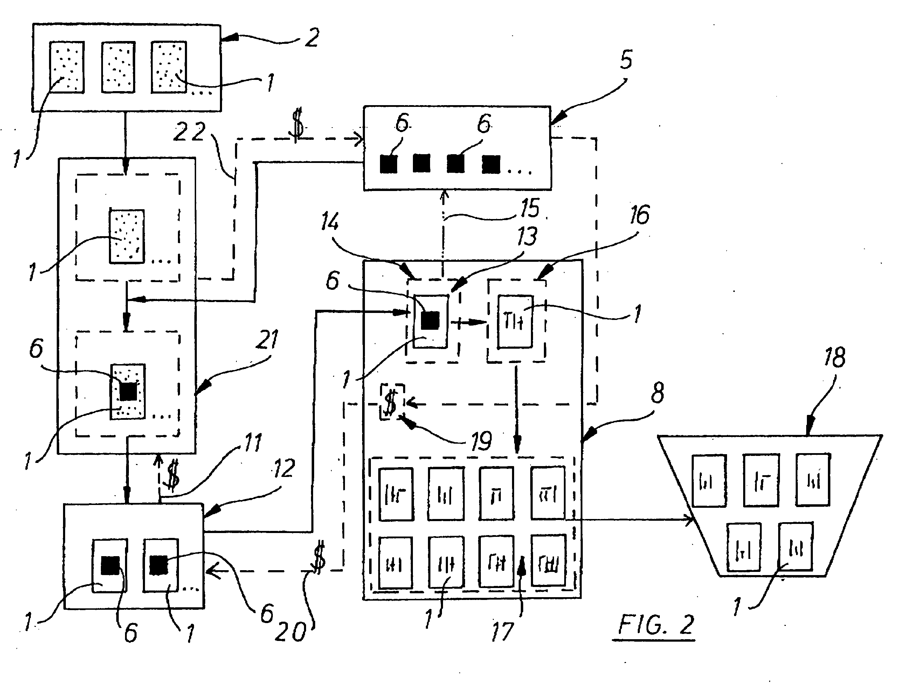

In der Fig. 2 ist eine alternative Verfahrensführung dargestellt, die im wesentlichen identisch ist zu derjenigen, wie sie in Verbindung mit der Fig. 1 bereits näher erläutert worden ist, so dass gleiche Teile mit gleichen Bezugszeichen bezeichnet werden. Im Unterschied zur Verfahrensführung nach Fig. 1 ist hier lediglich vorgesehen, dass die Pfandmarken 6 nicht bei der Abfülleinrichtung 2, z. B. einem Abfüller, wie z. B. einer Brauerei oder dergleichen aufgebracht werden, sondern von einer Handelseinrichtung 21, z. B. einem Supermarkt, bezogen werden gegen Zahlung eines entsprechenden Pfandgelds 22 und von der Handelseinrichtung 21 auch die Aufbringung der Pfandmarken 6 auf den Getränkekartons 1 erfolgt. Dieses System ist von Vorteil, wenn die Abfülleinrichtung 2 im Ausland angesiedelt ist. Bezüglich der weiteren Verfahrensführung wird auf die Erläuterungen in Verbindung mit der Fig. 1 verwiesen.

Die hier beschriebenen Verfahrensführungen können gegebenenfalls vollständig automatisiert sein, sofern ein entsprechendes Logistiksystem zur Verfügung steht.

Vorstehend wurde die erfindungsgemäße Vorrichtung und das erfindungsgemäße Verfahren an Beispiel der Rücknahme von Gebinden der Getränkeindustrie näher erläutert. Entsprechend kann auch eine Rücknahme bzw. Entsorgung von elektronischen Geräten bzw. elektronischen Bauteilen als Elektronikschrott oder von Kraftfahrzeugen und/oder Teilen davon erfolgen, wobei hier beim Hersteller anstelle einer Pfandmarke eine Kennmarke aufgebracht wird, die bei einem Entsorgungsfachbetrieb mittels der Erkennungseinrichtung eine eindeutige Identifizierung des Herstellers ermöglicht, wobei die Kennung anschließend unmittelbar nach deren Erfassung entwertet und/oder zerstört wird. Dadurch können die Kosten für das Recycling und/oder die Entsorgung vom Entsorgerfachbetrieb den Herstellern direkt oder indirekt über Poollösungen angelastet werden. Diese Belastung der Hersteller mit den Entsorgungskosten erfolgt vorzugsweise über eine zentrale Verwaltungseinrichtung, z. B. eine Verrechnungs- und/oder Clearingstelle, die eine Auswerteeinrichtung aufweist, die mit der Erkennungseinrichtung gekoppelt ist und von dieser entsprechend mit den erforderlichen Daten beschickbar ist.

## Patentansprüche

1. Vorrichtung zur Rücknahme von Gegenständen, insbesondere zur Rücknahme von Gebinden der Getränkeindustrie,
mit einer Erkennungseinrichtung, mittels der eine auf den Gegenständen aufgebrachte Kennung erfasst ist,
**dadurch gekennzeichnet,**
**dass** der Erkennungseinrichtung (14) eine Kennungs-Entwertungseinrichtung (16) nachgeschaltet ist, mit der lediglich die auf den Gegenständen (1) aufgebrachte Kennung (6) nach deren Erfassung entwertet und/oder zerstört wird.

2. Vorrichtung nach Anspruch 1, **dadurch gekennzeichnet, dass** die Erkennungseinrichtung (14) mit einer Auswerteeinrichtung gekoppelt ist, in der die von der Erkennungseinrichtung (14) erfassten Daten ausgewertet werden.

3. Vorrichtung nach Anspruch 1 oder Anspruch 2, **dadurch gekennzeichnet, dass** die Kennung (6) durch eine auf die Gegenstände aufgebrachte Pfandmarke, die einen bestimmten mittels der Erkennungseinrichtung (14) erfassbaren Pfandwert aufweist, oder Wertmarke oder Kennmarke gebildet ist.

4. Vorrichtung nach Anspruch 2 und Anspruch 3, **dadurch gekennzeichnet, dass** die Kennungen (6) zudem so ausgebildet sind, dass mittels der Erkennungseinrichtung (14) bestimmte Hinweise auf den Gegenstand (1), insbesondere auf die Art und/oder die Beschaffenheit und/oder die Menge und/oder das Gewicht und/oder die Herkunft des Gegenstandes (1), erfasst und der Auswerteeinrichtung zur Auswertung der Daten zufgeführt werden.

5. Vorrichtung nach Anspruch 4, **dadurch gekennzeichnet, dass** die Auswerteeinrichtung nach Erreichen oder Überschreiten bestimmter vorgegebener Mengen- und/oder Gewichtswerte ein Abholsignal an eine Abholeinrichtung liefert, die die aufgelaufenen und mit einer entwerteten und/oder zerstörten Kennung (6) versehenen, rückgenommenen Gegenstände (1) vom Lagerort abholt und gegebenenfalls einer Zerkleinerungs- und/oder Kompaktiereinrichtung einer Entsorgungseinrichtung (18) zuführt, in der die Gegenstände (1) zerkleinerert und/oder verdichtet werden.

6. Vorrichtung nach einem der Ansprüche 1 bis 5, **dadurch gekennzeichnet, dass** die Kennung (6) fälschungssicher in der Art einer Banknote ausgebildet ist.

7. Vorrichtung nach einem der Ansprüche 1 bis 6, **dadurch gekennzeichnet, dass** die Kennung (6) als auf den Gegenstand aufklebbare Marke ausgebildet ist.

8. Vorrichtung nach einem der Ansprüche 1 bis 7, **dadurch gekennzeichnet, dass** die Kennungs-Entwertungseinrichtung (16) so ausgebildet ist, dass diese eine thermische und/oder chemische und/oder elektronische und/oder mechanische Zerstörung der Kennung (6) bewirkt.

9. Vorrichtung nach einem der Ansprüche 1 bis 8, **dadurch gekennzeichnet, dass** die Gegenstände (1) Einweggebinde der Getränkeindustrie sind, vorzugsweise Einwegverpackungen oder Einwegflaschen oder Einwegdosen oder dergleichen.

10. Vorrichtung nach einem der Ansprüche 1 bis 8, **dadurch gekennzeichnet, dass** die Gegenstände elektronische Bauteile und/oder Elektrogeräte als Elektroschrott sind.

11. Vorrichtung nach einem der Ansprüche 1 bis 10, **dadurch gekennzeichnet, dass** die Erkennungseinrichtung (14) integral mit der Kennungs-Entwertungseinrichtung (16) ausgebildet ist.

12. Vorrichtung nach einem der Ansprüche 1 bis 11, **dadurch gekennzeichnet, dass** die Vorrichtung als mit der Hand bedienbares Handgerät mit darin integrierter Erkennungs- und Entwertungseinrichtung ausgebildet ist.

13. Vorrichtung nach einem der Ansprüche 1 bis 12, **dadurch gekennzeichnet,**
**dass** die Vorrichtung als Rücknahmeautomat (8) ausgebildet ist, der eine Aufnahmeeinrichtung (13) zur Aufnahme der rückzunehmenden Gegenstände (1) aufweist,
**dass** der Aufnahmeeinrichtung (13) die Erkennungseinrichtung (14) zugeordnet ist zur Erfassung der auf den rückzunehmenden Gegenständen (1) aufgebrachten Kennung (6),
**dass** der Erkennungseinrichtung (14) die Kennungs-Entwertungseinrichtung (16) nachgeschaltet ist zur Entwertung und/oder Zerstörung der auf den Gegenständen (1) aufgebrachten und mittels der Erkennungseinrichtung (14) erfassten Kennung (6).

14. Vorrichtung nach Anspruch 13, **dadurch gekennzeichnet, dass** der Rücknahmeautomat (8) eine entleerbare Zwischenlagereinrichtung (17) aufweist, in der die Gegenstände (1) mitsamt entwerteter und/oder zerstörter Kennung (6) zwischengelagert werden.

15. Vorrichtung nach Anspruch 13 oder Anspruch 14, **dadurch gekennzeichnet, dass** der Rücknahmeautomat (8) eine Pfandrückgabeeinrichtung (19) aufweist zur Ausgabe eines dem oder den rückgegebenen Gegenständen (1) entsprechenden und mittels der Erkennungseinrichtung (14) erfassten Pfandwertes, vorzugsweise in Form von Geldscheinen und/oder Geldstücken und/oder Wertmünzen und/oder Wertscheinen und/oder in Form eines auf einer Chipkarte speicherbaren Geldwertes.

16. Vorrichtung nach einem der Ansprüche 1 bis 15, **dadurch gekennzeichnet, dass** nicht mit einer mittels der Erkennungseinrichtung (14) erkennbaren und erfassbaren Kennung (6) markierte Gegenstände von der Erkennungseinrichtung (14) nicht erfasst und gegebenenfalls nicht angenommen und/oder aussortiert werden.

17. Vorrichtung nach einem der Ansprüche 1 bis 16, **dadurch gekennzeichnet,**
**dass** eine mit der Erkennungseinrichtung (14) gekoppelte Auswerteeinrichtung entfernt zu der Erkennungseinrichtung (14) und der Kennungs-Entwertungseinrichtung (16) angeordnet ist, und
**dass** die Auswerteeinrichtung Bestandteil einer vorzugsweise zentralen Ausgabeeinrichtung als Verwaltungseinrichtung (5) für Kennungen (6) ist, von der die Kennungen (6) an eine die Kennungen (6) auf den Gegenständen (1) vor deren Verkauf anbringende Einrichtung (7; 21) ausgegeben werden.

18. Vorrichtung nach Anspruch 17, **dadurch gekennzeichnet, dass** von der Verwaltungseinrichtung (5) Pfandmarken (6) entsprechend einem bestimmten Pfandwert oder Wertmarken und/oder Kennmarken zur Markierung von Gegenständen ausgegeben werden.

19. Vorrichtung nach Anspruch 18, **dadurch gekennzeichnet dass** eine Pfandrückgabeeinrichtung (19) am Ort der Erkennungs- und Entwertungseinrichtung (14, 16) über die Ausgabeeinrichtung (5) mittelbar oder unmittelbar mit einem Pfandrückgabewert beschickt werden.

20. Verfahren zur Rücknahme von Gegenständen, insbesondere zur Rücknahme von Gebinden der Getränkeindustrie,
bei dem mit einer Kennung versehene Gegenstände einer Erkennungseinrichtung zugeführt werden, in der die Kennung erfasst wird,
**dadurch gekennzeichnet,**
**dass** die Gegenstände (1) nach der Erfassung der Kennung (6) einer Kennungs-Entwertungseinheit (16) zugeführt werden, in der lediglich die auf den Gegenständen (1) aufgebrachte Kennung (6) entwertet und/oder zerstört wird.

21. Verfahren nach Anspruch 20, **dadurch gekennzeichnet,**
**dass** in einem ersten Verfahrensschritt von einer vorzugsweise zentralen Ausgabeeinrichtung (5) Kennungen (6) ausgegeben werden, die in einem zweiten Verfahrensschritt auf die Gegenstände (1) aufgebracht werden, und
**dass** die markierten Gegenstände (1) nach deren Gebrauch der Erkennungseinrichtung (14) und anschließend der Kennungs-Entwertungseinrichtung (16) zugeführt werden.

22. Verfahren nach Anspruch 20 oder Anspruch 21, **dadurch gekennzeichnet, dass** die mit einer entwerteten und/oder zerstörten Kennung (6) versehenen Gegenstände (1) von einer Abholeinrichtung abgeholt und einer Entsorgungseinrichtung (18) zugeführt werden, in der sie ggf. mittels einer Zerkleinerungs- und/oder Kompaktiereinrichtung zerkleinert und/oder verdichtet werden.

23. Verfahren nach einem der Ansprüche 20 bis 22, **dadurch gekennzeichnet, dass** die von der Erkennungseinrichtung (14) erfassten Daten der Kennung (6) zu einer Auswerteeinrichtung geliefert werden, die vorzugsweise Bestandteil einer zentralen Ausgabeeinrichtung (5) für Kennungen (6) ist.

24. Verfahren nach einem der Ansprüche 20 bis 23, **dadurch gekennzeichnet, dass** nach dem Erfassen der als Pfandmarke ausgebildeten Kennung (6) eines rückzunehmenden Gegenstandes (1) und nach der darauffolgenden Entwertung und/oder Zerstörung der Kennung (6) über eine Pfandrückgabeeinrichtung (19) eine Pfandrückgabe erfolgt.

## Claims

1. Apparatus for returning items, in particular for returning containers of the beverage industry,
said apparatus having a detection device which is used to record an identifier which has been applied to the items,
**characterized in that**
an identifier cancellation device (16) is connected downstream of the detection device (14) and is used to cancel and/or destroy only the identifier (6), which has been applied to the items (1), after it has been recorded.

2. Apparatus according to Claim 1, **characterized in that** the detection device (14) is coupled to an evaluation device in which the data recorded by the detection device (14) are evaluated.

3. Apparatus according to Claim 1 or Claim 2, **characterized in that** the identifier (6) is formed by a deposit mark, which has been applied to the items and has a particular deposit value which can be recorded using the detection device (14), or a value mark or an identification mark.

4. Apparatus according to Claim 2 and Claim 3, **characterized in that** the identifiers (6) are additionally formed in such a manner that particular indications of the item (1), in particular the type and/or the nature and/or the quantity and/or the weight and/or the origin of the item (1), are recorded using the detection device (14) and are supplied to the evaluation device in order to evaluate the data.

5. Apparatus according to Claim 4, **characterized in that**, after particular predefined quantity and/or weight values have been reached or exceeded, the evaluation device supplies a retrieval signal to a retrieval device which retrieves the returned items (1), which have accrued and have been provided with a cancelled and/or destroyed identifier (6), from the storage location and supplies them, if necessary, to a comminution and/or compacting device of a disposal device (18) in which the items (1) are comminuted and/or compacted.

6. Apparatus according to one of Claims 1 to 5, **characterized in that** the identifier (6) is designed to be forgery-proof, like a banknote.

7. Apparatus according to one of Claims 1 to 6, **characterized in that** the identifier (6) is in the form of a mark which can be affixed to the item.

8. Apparatus according to one of Claims 1 to 7, **characterized in that** the identifier cancellation device (16) is designed in such a manner that it destroys the identifier (6) thermally and/or chemically and/or electronically and/or mechanically.

9. Apparatus according to one of Claims 1 to 8, **characterized in that** the items (1) are disposable containers of the beverage industry, preferably disposable packaging or disposable bottles or disposable cans or the like.

10. Apparatus according to one of Claims 1 to 8, **characterized in that** the items are electronic components and/or electrical devices in the form of electrical scrap.

11. Apparatus according to one of Claims 1 to 10, **characterized in that** the detection device (14) is integral with the identifier cancellation device (16).

12. Apparatus according to one of Claims 1 to 11, **characterized in that** the apparatus is in the form of a handheld device which can be manually operated and has an integrated detection and cancellation device.

13. Apparatus according to one of Claims 1 to 12, **characterized in that**
the apparatus is in the form of an automatic return machine (8) having a receiving device (13) for receiving the items (1) to be returned,
**in that** the receiving device (13) is assigned the detection device (14) for recording the identifier (6) which has been applied to the items (1) to be returned,
**in that** the identifier cancellation device (16) is connected downstream of the detection device (14) for the purpose of cancelling and/or destroying the identifier (6) which has been applied to the items (1) and is recorded using the detection device (14).

14. Apparatus according to Claim 13, **characterized in that** the automatic return machine (8) has an intermediate storage device (17) which can be emptied and in which the items (1) are intermediately stored together with a cancelled and/or destroyed identifier (6).

15. Apparatus according to Claim 13 or Claim 14, **characterized in that** the automatic return machine (8) has a deposit return device (19) for issuing a deposit value which corresponds to the item or items (1) returned and is recorded using the detection device (14), preferably in the form of notes and/or coins and/or tokens and/or vouchers and/or in the form of a monetary value which can be stored on a chip card.

16. Apparatus according to one of Claims 1 to 15, **characterized in that** items which have not been marked with an identifier (6) which can be detected and recorded using the detection device (14) are not recorded by the detection device (14) and, if appropriate, are not accepted and/or sorted.

17. Apparatus according to one of Claims 1 to 16, **characterized in that**
an evaluation device which is coupled to the detection device (14) is arranged at a distance from the detection device (14) and the identifier cancellation device (16), and
**in that** the evaluation device is part of a preferably central issuing device in the form of a management device (5) for identifiers (6), said issuing device issuing the identifiers (6) to a device (7; 21) which affixes the identifiers (6) to the items (1) before they are sold.

18. Apparatus according to Claim 17, **characterized in that** the management device (5) issues deposit marks (6) in accordance with a particular deposit value or value marks and/or identification marks for marking items.

19. Apparatus according to Claim 18, **characterized in that** a deposit return device (19) at the location of the detection and cancellation device (14, 16) is directly or indirectly loaded with a deposit return value by means of the issuing device (5).

20. Method for returning items, in particular for returning containers of the beverage industry,
in which items which are provided with an identifier are supplied to a detection device in which the identifier is recorded,
**characterized in that**
after the identifier (6) has been recorded, the items (1) are supplied to an identifier cancellation unit (16) in which only the identifier (6) which has been applied to the items (1) is cancelled and/or destroyed.

21. Method according to Claim 20, **characterized in that**
in a first method step, a preferably central issuing device (5) issues identifiers (6) which are applied to the items (1) in a second method step, and
**in that** the marked items (1) are supplied to the detection device (14) and then to the identifier cancellation device (16) after they have been used.

22. Method according to Claim 20 or Claim 21, **characterized in that** the items (1) which have been provided with a cancelled and/or destroyed identifier (6) are retrieved by a retrieval device and are supplied to a disposal device (18) in which they are comminuted and/or compacted, if necessary, using a comminution and/or compacting device.

23. Method according to one of Claims 20 to 22, **characterized in that** the data of the identifier (6) which are recorded by the detection device (14) are supplied to an evaluation device which is preferably part of a central issuing device (5) for identifiers (6).

24. Method according to one of Claims 20 to 23, **characterized in that** a deposit is returned using a deposit return device (19) after the identifier (6), which is in the form of a deposit mark, of an item (1) to be returned has been recorded and after the identifier (6) has then been cancelled and/or destroyed.

## Revendications

1. Dispositif pour la reprise d'objets, en particulier pour la reprise d'emballages en fûts métalliques de l'industrie des boissons,
avec un dispositif de reconnaissance à l'aide duquel une identification apposée sur les objets peut être enregistrée,
**caractérisé en ce que**
l'on connecte, en aval du dispositif de reconnaissance . (14), un dispositif d'oblitération d'identification (16), avec lequel l'identification (6) apposée sur les objets (1) est purement et simplement oblitérée et/ou détruite après son enregistrement.

2. Dispositif selon la revendication 1, **caractérisé en ce que** le dispositif de reconnaissance (14) est couplé à un dispositif d'analyse, dans lequel les données enregistrées par le dispositif de reconnaissance (14) sont analysées.

3. Dispositif selon la revendication 1 ou 2, **caractérisé en ce que** l'identification (6) est formée par une marque de consignation portée sur les objets indiquant une valeur de consignation déterminée pouvant être enregistrée à l'aide du dispositif de reconnaissance (14), ou par une marque de valeur ou une marque distinctive.

4. Dispositif selon la revendication 2 et 3, **caractérisé en ce que** les identifications (6) sont par ailleurs réalisées de manière à ce que, à l'aide du dispositif de reconnaissance (14), des notices explicatives définies concernant l'objet (1), en particulier le genre et/ou la nature et/ou la quantité et/ou le poids et/ou l'origine de l'objet (1), sont enregistrées et sont transférées au dispositif d'analyse pour l'analyse des données.

5. Dispositif selon la revendication 4, **caractérisé en ce que** le dispositif d'analyse, après avoir atteint ou dépassé des valeurs prédéfinies de quantités et/ou de poids prescrites, émet un signal de retrait à l'attention d'un dispositif de retrait, lequel vient chercher les objets (1) repris échoués et pourvus d'une identification (6) oblitérée et/ou détruite sur le lieu de dépôt et les amène le cas échéant vers un dispositif de désintégration et/ou compactage d'un dispositif d'élimination (18), dans lequel les objets (1) sont désintégrés et/ou comprimés.

6. Dispositif selon l'une des revendications 1 à 5, **caractérisé en ce que** l'identification (6) est réalisée de manière infalsifiable à la manière d'un billet de banque.

7. Dispositif selon l'une des revendications 1 à 6, **caractérisé en ce que** l'identification (6) est réalisée en tant que marque pouvant être collée sur l'objet.

8. Dispositif selon l'une des revendications 1 à 7, **caractérisé en ce que** le dispositif d'oblitération d'identification (16) est réalisé de manière à occasionner une destruction thermique et/ou chimique et/ou électronique et/ou mécanique de l'identification (6).

9. Dispositif selon l'une des revendications 1 à 8, **caractérisé en ce que** les objets (1) sont des emballages en fûts métalliques à usage unique de l'industrie des boissons, de préférence des emballages à usage unique ou des bouteilles à usage unique ou des boîtes à usage unique ou similaires.

10. Dispositif selon l'une des revendications 1 à 8, **caractérisé en ce que** les objets sont des composants électroniques et/ou des appareils électroniques en tant que ferraille électronique.

11. Dispositif selon l'une des revendications 1 à 10, **caractérisé en ce que** le dispositif de reconnaissance (14) est réalisée de manière intégrale avec le dispositif d'oblitération d'identification (16).

12. Dispositif selon l'une des revendications 1 à 11, **caractérisé en ce que** le dispositif est réalisé en tant qu'appareil manuel utilisable manuellement dans lequel se trouve le dispositif de reconnaissance et d'oblitération d'identification intégré.

13. Dispositif selon l'une des revendications 1 à 12, **caractérisé en ce que**
le dispositif est réalisé en tant qu'automate de reprise (8), lequel présente un dispositif de réception (13) pour la réception des objets (1) à reprendre,
**en ce que** l'on associe au dispositif de réception (13) le dispositif de reconnaissance (14) pour enregistrer l'identification (6) apposée sur les objets (1) à reprendre,
**en ce qu'**en aval du dispositif de reconnaissance (14) on branche le dispositif d'oblitération d'identification (16) pour l'oblitération et/ou la destruction de l'identification (6) apposée sur les objets (1) et enregistrée grâce au dispositif de reconnaissance (14).

14. Dispositif selon la revendication 13, **caractérisé en ce que** l'automate de reprise (8) présente un dispositif de stockage intermédiaire pouvant être vidé (17), dans lequel les objets (1) avec l'identification (6) oblitérée et/ou détruite sont stockés de manière intermédiaire.

15. Dispositif selon la revendication 13 ou 14, **caractérisé en ce que** l'automate de reprise (8) présente un dispositif de restitution de consignation (19) pour la restitution d'une valeur de consignation correspondant à l'objet ou aux objets restitués et enregistrés à l'aide du dispositif de reconnaissance (14), de préférence sous la forme de billets de banque et/ou de pièces de monnaie et/ou pièces de valeur et/ou de billets de valeur et/ou sous forme de valeur monétaire pouvant être enregistrée sur une carte à puce.

16. Dispositif selon l'une des revendications 1 à 15, **caractérisé en ce que** des objets marqués par une identification ne pouvant pas être reconnue et enregistrée à l'aide du dispositif de reconnaissance (14) ne sont pas enregistrés par le dispositif de reconnaissance (14) et ne sont pas acceptés et/ou triés le cas échéant.

17. Dispositif selon l'une des revendications 1 à 16, **caractérisé en ce qu'**un dispositif d'analyse couplé au dispositif de reconnaissance (14) est disposé en éloignement du dispositif de reconnaissance (14) et du dispositif d'oblitération d'identification (16),
et ce que le dispositif d'analyse est un élément constitutif d'un dispositif de délivrance de préférence central en tant que dispositif de gestion (5) des identifications (6), grâce auquel les identifications (6) sont données à un dispositif (7 ; 21) qui appose les identifications (6) sur les objets (1) avant leur mise à la vente.

18. Dispositif selon la revendication 17, **caractérisé en ce que** le dispositif de gestion (5) délivre des marques de consignation (6) en fonction d'une valeur de consignation déterminée ou bien des marques de valeur et/ou des marques distinctives pour le marquage d'objets.

19. Dispositif selon la revendication 18, **caractérisé en ce qu'**un dispositif de restitution de consignation (19) peut être alimenté sur le lieu du dispositif de reconnaissance et d'oblitération (14, 16) de manière directe ou indirecte via le dispositif de délivrance (5) avec une valeur de restitution de la consignation.

20. Procédé pour la reprise d'objets, en particulier pour la reprise d'emballages en fûts métalliques de l'industrie des boissons,
avec lequel des objets munis d'une identification sont amenés vers un dispositif de reconnaissance, dans lequel l'identification est enregistrée,
**caractérisé en ce que** les objets (1), après l'enregistrement de l'identification (6), sont amenés vers une unité d'oblitération d'identification (16) dans laquelle on oblitère et/ou détruit purement et simplement l'identification (6) apposée sur les objets (1).

21. Procédé selon la revendication 20, **caractérisé en ce que**
lors d'une première étape du procédé, des identifications (6) sont délivrées par un dispositif de délivrance (5) de préférence central, lesquelles sont apposées sur les objets (1) lors d'une deuxième étape du procédé, et
**en ce que** les objets (1) marqués, après leur utilisation, sont amenés vers le dispositif de reconnaissance (14) et ensuite le dispositif d'oblitération d'identification (16).

22. Procédé selon la revendication 20 ou 21, **caractérisé en ce que** les objets (1) munis d'une identification oblitérée et/ou détruite sont enlevés par un dispositif de retrait et sont amenés vers un dispositif d'élimination (18) dans lequel ils sont désintégrés et/ou comprimés le cas échéant à l'aide d'un dispositif de désintégration et/ou de compactage.

23. Procédé selon l'une des revendications 20 à 22, **caractérisé en ce que** les données d'identification (6) enregistrées par le dispositif de reconnaissance (14) sont transmises à un dispositif d'analyse, lequel est de préférence un élément constitutif d'un dispositif de délivrance (5) central pour des identifications (6).

24. Procédé selon l'une des revendications 20 à 23, **caractérisé en ce qu'**après l'enregistrement de l'identification (6) réalisée en tant que marque de consignation d'un objet (1) à reprendre et après l'oblitération et/ou la destruction de l'identification (6) qui s'en suit, une restitution de la consignation s'effectue via un dispositif de restitution de consignation (19).
